# EUROPÄISCHE PATENTSCHRIFT

(11) **EP 1 099 050 B1**
(45) Veröffentlichungstag und Bekanntmachung des Hinweises auf die Patenterteilung: **23.10.2002**
(21) Anmeldenummer: 99936592.7
(22) Anmeldetag: 22.07.1999
(51) Int. Cl.: F02C 7/045, F02K 1/82

(54) **VORRICHTUNG UND VERFAHREN ZUR AKTIVEN REDUZIERUNG DER SCHALLEMISSION VON STRAHLTRIEBWERKEN UND ZU DEREN DIAGNOSE**
DEVICE AND METHOD FOR ACTIVELY REDUCING THE NOISE EMISSIONS OF JET ENGINES AND FOR DIAGNOSING THE SAME
DISPOSITIF ET PROCEDE PERMETTANT DE REDUIRE ACTIVEMENT LES EMISSIONS SONORES DE REACTEURS ET DE LES DIAGNOSTIQUER

(30) Priorität: 22.07.1998 DE 19832963; 23.09.1998 DE 19843615
(43) Veröffentlichungstag der Anmeldung: 16.05.2001
(73) Patentinhaber: Nagel, Friedmund, 73119 Zell (DE)
(72) Erfinder: Nagel, Friedmund, 73119 Zell (DE)
(74) Vertreter: Heselberger, Johannes
(86) Internationale Anmeldenummer: EP9905252
(87) Internationale Veröffentlichungsnummer: WO00005494

(56) Entgegenhaltungen:
- WO-A-96/12269
- WO-A-98/39209
- GB-A- 1 456 018
- US-A- 3 936 606
- US-A- 4 044 203
- US-A- 5 386 689
- US-A- 5 478 199

## Beschreibung

Die vorliegende Erfindung bezieht sich auf eine Vorrichtung und ein Verfahren zur aktiven Reduzierung der Schallemission von Strahltriebwerken und zu deren Diagnose.

Das Innengeräusch, wie auch das Außengeräusch von Strahlflugzeugen wird heute überwiegend durch die Schallemissionen ihrer Strahltriebwerke bestimmt. Mit zunehmendem Luftverkehr gewinnt sowohl die Reduzierung des Innengeräuschs von Flugzeugen, wie auch insbesondere die Verminderung des Fluglärms, dem Anwohner von Flugplätzen ausgesetzt sind, an Bedeutung.

Eine Reduzierung des Schallpegels im Innenraum von Flugzeugen wird häufig mit einer weiter verbesserten passiven Geräuschdämmung und Geräuschdämpfung zu erreichen versucht. Im Rahmen der Bemühungen um eine Schallreduzierung werden auch Maßnahmen zur Körperschallentkopplung getroffen. Dadurch soll verhindert werden, daß der von einem Strahltriebwerk ausgesandte Schall auf andere Teile des Flugzeuges, insbesondere auf mit dem Innenraum des Flugzeugs in Verbindung stehende Teile übertragen wird.

Weiterhin werden sogenannte DVAs-Dynamic Vibration Absorbers eingesetzt, die innerhalb eines definierten, relativ engen Frequenzspektrums durch Resonanz einen Teil der durch die Rumpfstruktur des Flugzeuges übertragenen Schwingungen absorbieren.

In Einzelfällen werden schließlich auch Schallkompensationsanlagen fiir den Fluggastbereich innerhalb der Innenverkleidung des Flugzeugrumpfes installiert. Über Lautsprecher wird hier Kompensationsschall abgestrahlt, um eindringende Triebwerksgeräusche zu vermindern.

Die beschriebenen Maßnahmen der Geräuschdämmung, Geräuschdämpfung, Körperschallentkopplung, etc., führen jedoch fast zwangsweise zu einem erhöhten Gewicht. Generell vermindern alle gewichtserhöhenden Maßnahmen des Schallschutzes die Wirtschaftlichkeit von Flugzeugen durch verminderte Nutzlast und erhöhten Treibstoffverbrauch.

Darüber hinaus ist eine wirksame Geräuschreduzierung mit einem hohen Entwicklungsaufwand zur Ortung und zur Bekämpfung der einzelnen Schallquellen und der Schallübertragungswege verbunden. Dieser Aufwand fällt letztlich mit jeder neuen Innenausstattung eines Strahlflugzeugs an. Um die Geräuschreduzierung langfristig wirkungsvoll zu gestalten, muß die Qualität und die Alterung der verwendeten Materialien sowie die Wirksamkeit der angewandten Verarbeitungstechniken in aufwendigen Verfahren untersucht und zugelassen werden. Ein genereller Nachteil der vorgenannten Systeme besteht darin, daß sie keine Reduzierung der Schallemission im Außenbereich des Flugzeugs bewirken.

Zur Verminderung der Außengeräuschabgabe von Strahltriebwerken wurden in der Vergangenheit bereits verschiedene konstruktive Maßnahmen ergriffen. Beispielsweise führte die Entwicklung von Mantelstromtriebwerken zu einer Reduzierung der Geräuschabgabe. Diese Geräuschreduzierung erreicht jedoch noch kein befriedigendes Maß.

Die US-Patentschrift 5,325,661 bezieht sich auf einen Geräuschentstörer für Strahlstrommischer für Hochgeschwindigkeitsstrahlflugzeuge. Dieser mischt einen Hochgeschwindigkeitsluftstrom mit einem Luftstrom geringerer Geschwindigkeit. Zur Unterdrückung von Geräuschen werden Schallwellen eingesetzt, welche durch in der Düse eingebaute Hindernisse entstehen.

In der US-Patentschrift 5,758,488 wird ein System zur Lärmreduzierung von Flugzeugturbinen beschrieben. Dieses besteht im wesentlichen aus einer Lärmreduzierungseinheit, einem Gebläse, einem Luftstromumleiter, einer Zentralstromexpansionskammer, einer Einheit zur Schubumkehr und einer Düse.

Eine Geräuschreduzierung wird bei diesen Lösungen durch konstruktive, strömungstechnische Verbesserungen versucht. Zur Verminderung der Außengeräusche von Strahltriebwerken werden im Stand der Technik des weiteren Vorrichtungen zur aktiven Geräuschminderung vorgeschlagen.

In der PCT-Anmeldung WO 96/12269 wird eine elektro-pneumatische Vorrichtung beschrieben. Sie arbeitet mit einem Referenzsignal. Dieses wird von der Winkelgeschwindigkeit des Rotors oder der Lauffrequenz der Rotorblätter und von Fehlersignalen abgeleitet, welche von akustischen Wandlern aufgenommen werden. Mit Hilfe der Signale werden Ventile an der Gebläsestufe angesteuert, aus denen ein druck- und temperaturregulierter Luftstrom zur Geräuschkompensation ausgeblasen wird.

In der PCT-Anmeldung WO 96/11465 wird ebenfalls eine Vorrichtung zur aktiven Verringerung von Triebwerksgeräuschen im Bereich des Triebwerkseinlaufs beschrieben. Die Vorrichtung weist Sensoren zur Messung der Lauffrequenz der Rotorblätter und Sensoren zur Messung des Restschalles auf. Beide Sensoren liefern Signale, welche an eine Kontrolleinheit weitergeleitet werden. Die Kontrolleinheit ist mit Lautsprechern verbunden, die ein Gegengeräusch erzeugen, um die Geräusche des Flugzeugantriebs zu reduzieren. Die Sensoren zur Messung der Lauffrequenz und die Lautsprecher sind umfangsseitig in der Wandung des Triebwerkseinlaufs angebracht.

Auch die PCT-Anmeldung WO 98/12420 bezieht sich auf eine Vorrichtung zur aktiven Reduzierung der Umlaufgeräusche von Rotorblättern in Flugzeugtriebwerken. Hierzu wird entlang dem Weg des Quellsignals ein Fluid hohen Druckes derart geführt, daß zur Druckwelle des Quellsignals eine Gegendruckwelle erzeugt wird.

In der US-Patentschrift 3,936,606 wird eine Vorrichtung zur Reduzierung von Schallemissionen unter anderem im Zusammenhang mit einer Gasturbine beschrieben. Hier werden die Schallwandler entweder an der Außenseite der Turbine angeordnet oder flächig über die gesamte Auslaßöffnung verteilt.

Aufgabe der vorliegenden Erfindung ist die Bereitstellung einer Vorrichtung und eines Verfahrens zur aktiven Reduzierung der Schallemission von Strahltriebwerken, wobei ein hohes Maß an Geräuschreduzierung auf möglichst einfache und dauerhaft wirkungsvolle Weise erreicht werden soll, insbesondere unter kontrollierten akustischen Bedingungen und unter Vermeidung von wesentlichen Eingriffen in das Triebwerk selbst. Dabei soll die Lösung sowohl im Einlaß- als auch im Auslaßbereich des Triebwerks anwendbar sein.

Zur Lösung dieses Problems wird eine Vorrichtung zur aktiven Reduzierung der Schallemission eines Strahltriebwerks zur Verfügung gestellt, das einen Lufteinlaß, einen Gasauslaß und das eigentliche Triebwerk aufweist, wobei das eigentliche Triebwerk zwischen dem Lufteinlaß und dem Gasauslaß angeordnet ist. Die Vorrichtung weist in dem Lufteinlaß vor dem Triebwerk und/oder in dem Gasauslaß nach dem Triebwerk mindestens einen ersten Schallwandler zur Umwandlung von Schallwellen in erste Signale, die ein Maß für die Frequenz, Amplitude und für die Phase der Schallwellen sind, eine elektronische Steuereinheit zur Umwandlung der ersten Signale in zweite Signale und mindestens einen Lautsprecher zweiten Schallwandler zur Umwandlung der zweiten Signale in Kompensationsschallwellen, die eine Frequenz, Amplitude und Phase aufweisen, so daß sich die Schallwellen und die Kompensationsschallwellen wenigstens teilweise auslöschen, auf. Gemäß der vorliegenden Erfindung ist der zweite Schallwandler zentral in dem Lufteinlaß vor oder in einem zentral angeordneten Konus vor dem Triebwerk und/oder auf einer zentral angeordneten Halterung in dem Gasauslaß nach dem Triebwerk angeordnet.

Im Rahmen der vorliegenden Erfindung umfaßt der Begriff Strahltriebwerk auch Propeller-Turbinen-Luftstrahltriebwerke und Turbinen zur Versorgung eines Flugzeugs mit elektrischer Energie, solange die Antriebsturbinen nicht in Betrieb sind, sogenannte "Auxiliary Power Units (APU)".

Der erste Schallwandler ist typischerweise ein Mikrophon zur Aufnahme der von dem Strahltriebwerk ausgesandten Schallwellen, während der zweite Schallwandler ein Lautsprecher zum Aussenden von Kompensationsschallwellen ist. Andere erste Schallwandler zur Erfüllung des gleichen Zwecks sind aber jeweils genauso brauchbar. Im Sinne der vorliegenden Erfindung kann der Begriff Schallwandler auch eine Mehrzahl von Schallwandlern umfassen. Die mehreren Schallwandler können arbeitsteilig bezüglich der Erfassung des gesamten relevanten Schallausbreitungsraumes, der relevanten Schallfrontebenen und des notwendigen Frequenzbereiches zum Einsatz kommen.

Der erste Schallwandler wandelt die Schallwellen in elektromagnetische oder optische erste Signale um, die ein Maß fiir die Frequenz, Amplitude und für die Phasenlage der einlaufenden Schallwellen darstellen. Diese ersten Signale können mit Hilfe eines Mikroprozessors bearbeitet werden. Zum Beispiel kann eine Fourieranalyse durchgeführt werden, um das komplexe Schallbild in Einzelschwingungen zu zerlegen. Außerdem können bestimmte Frequenzanteile, beispielsweise solche außerhalb des für Menschen hörbaren Spektrums, von einer Kompensation ausgenommen werden, wenn diese nicht etwa aus Gründen der physischen Geräuschwahrnehmung als notwendig erachtet werden sollte. Die Kompensation des Schalls durch den Lautsprecher zweiten Schallwandler soll möglichst vollständig sein, das heißt der verbleibende Restschallpegel soll möglichst gering sein.

Erfindungsgemäß wird der Lautsprecher zentral in dem Lufteinlaß vor oder in einem zentral angeordneten Konus vor dem Triebwerk und/oder auf einer zentral angeordneten Halterung in dem Gasauslaß nach dem Triebwerk angeordnet. Die zentrale Anordnung des zweiten Schallwandlers wird gewählt, weil die dadurch erreichten seitlich begrenzten symmetrischen akustischen Verhältnisse die Wirksamkeit der Schallkompensation deutlich erhöhen und die Schallkompensationsanlage insgesamt vereinfachen. Insbesondere werden Ungenauigkeiten der Schallkompensation durch Laufzeitunterschiede der Schallwellen von mehreren dezentralen Lautsprechern vermieden, ebenso störende Interferenzen, die bei dezentraler, insbesondere gegenüberliegender, Anordnung mehrerer Lautsprecher auftreten können.

Der erste Schallwandler ist vorzugsweise ebenfalls zentral in dem Lufteinlaß vor dem Triebwerk und/oder zentral in dem Gasauslaß nach dem Triebwerk angeordnet.

Im Rahmen der vorliegenden Erfindung umfaßt der Begriff "zentral" auch eine im wesentlichen mittige Anordnung der Schallwandler. Strahltriebwerke besitzen oftmals keine völlig kreisrunden Querschnittsflächen im Triebwerkseinlauf und im Gasauslaß. In diesem Falle müssen die Schallwandler dann derart im wesentlichen zentral angeordnet werden, daß sie weitgehend symmetrische akustische Bedingungen gewährleisten.

Die Schallausbreitung erfolgt bei Strahltriebwerken regelmäßig in erster Linie sowohl nach vorn aus dem Triebwerkseinlaß als auch nach hinten aus dem Gasauslaß in Richtung der Längsachse des Triebwerks. Die Schallwandler werden deshalb bevorzugt so angeordnet und ausgerichtet, daß der Kompensationsschall in einer Ebene abgestrahlt wird, die im wesentlichen senkrecht zur Längsachse des Triebwerks und damit parallel zu seiner Hauptschallfrontebene orientiert ist. Davon abweichende Nebenschallfrontebenen können durch Neigung des Abstrahlwinkels eines, gegebenenfalls sektoral aufgeteilten zweiten Schallwandlers bzw. mehrerer zweiter Schallwandler erfaßt werden.

Die Anordnung und Ausrichtung der Schallwandler in dem Strahltriebwerk, insbesondere bei einer Nachrüstung eines bereits bestehenden Strahltriebwerks, hat auch aerodynamischen Gesichtspunkten zu folgen. Denn die Wandler dürfen, bei den gegebenen hohen Luftgeschwindigkeiten in Strahltriebwerken, keinesfalls zu große Luftwiderstände aufweisen und dürfen die Leistung des Triebwerks nicht über ein vernachlässigbares Maß hinaus vermindern. Im Bereich des Lufteinlasses des Triebwerks ist deshalb eine Anordnung der Schallwandler vor dem Frontkonus an der Nabe des Niederdruckverdichters des Triebwerks vorteilhaft. Im hinteren Abgasbereich des Triebwerks werden die Schallwandler vorzugsweise hinter dem Endkonus des Triebwerks angebracht, sozusagen in dessen Windschatten. Dadurch wird nicht nur der Luftwiderstand gesenkt, sondern es wird auch die mechanische Stabilität der Anordnung gegenüber angreifenden Kräften der strömenden Luftmassen erhöht.

Eine bevorzugte Ausführungsform der erfindungsgemäßen Vorrichtung weist sowohl in dem Lufteinlaß vor dem Triebwerk, als auch in dem Gasauslaß nach dem Triebwerk einen ersten Schallwandler und einen zweiten Schallwandler auf Dadurch kann sowohl der von dem Strahltriebwerk nach vorne, wie auch der nach hinten abgestrahlte Schall bekämpft werden. Dabei können die Schallkompensationssysteme völlig unabhängig voneinander arbeiten.

Vorzugsweise beinhaltet die Vorrichtung zur Reduzierung der Schallemission einen zentral in dem Lufteinlaß des Strahltriebwerks angebrachten Konus, der mindestens eine Öffnung aufweist, wobei der erste Schallwandler und der zweite Schallwandler in dem Konus derart angebracht sind, daß sie über die Öffnung mit dem Lufteinlaß akustisch in Verbindung stehen. Damit kann die aus den beiden Schallwandlern und gegebenenfalls einem Mikroprozessor bestehende Schallkompensationseinheit in dem Lufteinlaß aerodynamisch vor Beaufschlagung durch direkte Anströmung und verschmutzungssicher untergebracht werden, und zugleich optimal auf den Kompensationsraum in dem Lufteinlaß einwirken. Weiterhin wird durch die aerodynamische Optimierung des Konus sichergestellt, daß sowohl im Bereich der Schallwandler, als auch im Kompensationsraum, also in dem Bereich in dem die Schallkompensation stattfindet, vergleichbare Druckverhältnisse herrschen.

Um bei entsprechenden Witterungsbedingungen eine Vereisung zu vermeiden, können der Konus und die Streben der Schallkompensationseinheit im Lufteinlaß des Triebwerks elektrisch beheizt werden.

In dem hinteren Gasauslaß des Strahltriebwerks werden die Schallwandler vorzugsweise auf einer zentralen Halterung angebracht, die an das Endstück des Triebwerks strömungstechnisch angepaßt ist. Auch hier ist eine aerodynamische Optimierung zur Herstellung ähnlicher Druckverhältnisse im Bereich der Schallwandler und im Bereich des Kompensationsraums erwünscht. Durch die Ausrichtung der Schallwandler nach hinten wird deren direkte Anströmung vermieden und somit sowohl die Entstehung eines Rauschsignals durch Anströmung unterbunden, wie auch die Verschmutzung und der Verschleiß der Schallwandler verhindert.

Eine weitere bevorzugte Ausführungsform der erfindungsgemäßen Vorrichtung weist eine Kühleinrichtung zur Kühlung des zweiten Schallwandlers und gegebenenfalls des ersten Schallwandlers im Gasauslaß auf. Hierfür werden der bzw. die Schallwandler vorzugsweise mittels einer Verkleidung von der direkten Beaufschlagung mit dem Gasstrom abgeschirmt. Besonders bevorzugt wird die Schallkompensationseinheit in einem Überkonus auf Distanz installiert. Zur Kühlung kann Außenluft oder bei Mantelstromtriebwerken relativ kühle Luft aus dem Mantelstrom abgegriffen und innerhalb einer oder mehrerer Streben in diesen Überkonus hineingeführt werden. Die Kühlluft kann dann, die Schallwandler einschließend, nach außen in den Gasauslaß des Triebwerks abfließen und verhindert gleichzeitig das Entstehen rückströmender Heißgasturbulenzen, die die Schallwandler beaufschlagen könnten. Bei Mantelstromtriebwerken strömt die Kühlluft bei ausreichender Druckdifferenz zwischen Mantelstrom und dem Gasstrom entsprechend ihres Druckgefälles automatisch nach. Dies wird verstärkt durch den vom Gasstrom im Gasauslaß des Triebwerks erzeugten dynamischen Druck vor den Schallwandlern. Bei genügender Geschwindigkeit des Flugzeugs, vor allem bei Einstromtriebwerken, kann die Kühlluft auch aus der Umgebung stammen. Während des Fluges kann das Nachströmen von Außenluft durch den Staudruck an einer für den Lufteinlaß geeigneten Stelle bewirkt werden. Auf diese Weise kann die hintere Schallkompensationseinheit thermisch gut kontrolliert werden.

Sollten Betriebszustände, etwa beim Anlassen oder Abstellen des Triebwerks oder bei Schubumkehr, auftreten, bei denen die natürliche Nachströmung der Luft für die Kühlung und den Turbulenzausgleich nicht ausreicht, kann die Kühlluft durch einen Ventilator gefördert werden.

Die Wirksamkeit der Kühlung für die Schallkompensationseinheit kann durch die Wahl geeigneter Werkstoffe mit geringer Wärmeleitfähigkeit fiir den Überkonus und die luftführenden Streben und soweit erforderlich durch Wärmestrahlung reflektierende Oberflächenvergütungen unterstützt werden.

Die erfindungsgemäße Vorrichtung kann auch zur Diagnose des Zustands und des Betriebs des Strahltriebwerkes eingesetzt werden. Für diesen Zweck weist die erfindungsgemäße Vorrichtung eine Vergleichseinheit zum Vergleich der ersten Signale des ersten Schallwandlers mit Sollsignalen auf. Die Frequenz der betrachteten Schallwellen muß dabei nicht notwendigerweise genau bestimmt werden. Bei Vorliegen eines sehr engen Schallfrequenzspektrums kann unter Umständen auch auf eine Frequenzanalyse verzichtet werden und es können alle auftretenden Frequenzen innerhalb eines Bereiches als eine repräsentative Frequenz betrachtet werden. Es genügt, daß eine sinnvolle Differenzierung zwischen Schallwellen mit unterschiedlicher Frequenz getroffen werden kann, um das Schallbild bis zu einem praktischen notwendigen Grad aufzuschlüsseln. Dieser Grad kann je nach Anwendung und je nach Anforderungen an die Genauigkeit der Schallanalyse variieren.

Es wird somit ein Ist-Schallbild mit einem Soll-Schallbild verglichen. Dieser Vergleich erlaubt eine Diagnose des Strahltriebwerkes, denn Strahltriebwerke haben für verschiedene Betriebszustände ein jeweils charakteristisches Schallbild. Störungen, z. B. durch Schäden am Antrieb verursachen eine Störung dieses Schallbildes. Bei Anordnung des ersten Schallwandlers im Einlaufkonus des Triebwerks oder in dessen Abgasbereich, können des weiteren Rückschlüsse auf Verschleiß, auf Brennraumablagerung, auf unsaubere Verbrennung infolge minderer Treibstoffqualität, oder auf mechanische Beschädigung, etwa infolge Vogelschlags, gezogen werden. Dabei kann man in vielen Fällen aus der Art der Störung des Schallbildes auf die Art der Störung schließen. Dieser Rückschluß auf den Zustand - also die dauerhafte Verfassung - oder auf den Betrieb bzw. Betriebszustand - also die temporäre Verfassung - des Strahltriebwerkes, erfordert in vielen Fällen weitere Bearbeitungsschritte, insbesondere weitere Vergleichsschritte. Auch ohne diese weitere Signalverarbeitung kann aber regelmäßig zumindest die Anwesenheit einer Störung festgestellt werden.

Im Rahmen des Diagnoseverfahrens des Strahltriebwerkes werden die in dem ersten Schallwandler gewonnenen ersten Signale, Teile dieser ersten Signale oder von diesen ersten Signalen abgeleitete Sekundärsignale verwendet. Die erhaltenen ersten Signale enthalten regelmäßig Information über die Frequenz, über die Amplitude und über die Phase mehrerer Schallwellen. Die Diagnose des Strahltriebwerkes kann jedoch in einigen Fällen bereits anhand des Frequenzspektrums durchgeführt werden, ohne daß es auf die Amplitude und Phase ankommt. In diesen Fällen wird die Amplitude lediglich einen bestimmten Grenzwert übersteigen müssen, damit der erste Schallwandler der auftretenden Frequenz eine Folge gibt. Dieser Grenzwert kann auch einfach durch die Ansprechschwelle des ersten Schallwandlers bestimmt sein. Wenn dann etwa Abweichungen von vorbestimmter Größe oder Bedeutung des Ist-Spektrums von dem Soll-Spektrum auftreten, können daraus die o. g. Rückschlüsse auf den Zustand oder Betrieb des Strahltriebwerks gezogen werden. Die Sollwerte werden für verschiedene typische Betriebszustände, z.B. unterschiedliche Drehzahlen, verschiedene Lastbereiche oder Betriebstemperaturen vorher ermittelt und in der Vergleichseinheit gespeichert, so daß im täglichen Betrieb fiir mehrere oder viele Betriebszustände ein Vergleich der Soll-Werte mit den Ist-Werten gezogen werden kann. Es ist dabei nicht notwendig, daß die volle Information der Schallkompensationseinheit ausgenutzt wird, daß also beispielsweise ein volles Frequenzspektrum von Ist-Werten mit den entsprechenden Soll-Werten verglichen wird. Ein selektiver Vergleich kann durchaus hinreichend sein. Der Vergleich selbst wird regelmäßig in einem Mikrochip oder Mikrocomputer durchgeführt, der ein Teil der Vergleichseinheit ist.

Vorzugsweise weist die erfindungsgemäße Vorrichtung zusätzlich eine Ausgabeeinheit zur Ausgabe eines Warnsignals bei Auftreten mindestens einer vorher bestimmten Abweichung der ersten Signale des ersten Schallwandlers von den Sollsignalen auf. Ein derartiges Warnsignal kann in einer schlichten Warnung durch eine Warnlampe bestehen, oder in der Aufforderung, die Betriebsbedingungen zu ändern, z. B. Schub wegzunehmen. Als Warnsignal im Sinne dieser Offenbarung gilt aber auch ein Signal, das automatisch eine bestimmte Folge herbeiführt, etwa eine Lastanpassung, eine Änderung des Zündzeitpunkts, eine Notabschaltung oder eine Information einer Zentrale per Funk, daß eine bestimmte Fehlfunktion vorliegt.

Die erfindungsgemäße Vorrichtung umfaßt vorzugsweise auch eine Auswahleinheit zur Auswahl von ersten Signalen des ersten Schallwandlers, die einem oder mehreren bestimmten Frequenzbereichen entsprechen, zur Durchführung des Signalvergleichs. Damit wird ein selektiver Vergleich von Frequenzen ermöglicht, der weniger Rechnerkapazität benötigt und deshalb schneller erfolgen kann.

Eine weitere vorteilhafte Ausführungsform der erfindungsgemäßen Vorrichtung weist eine Servicekontrolleinheit zur Berechnung und Anzeige des Fälligkeitstermins des nächsten Services fiir das Strahltriebwerk aufgrund des Zeitverhaltens von Signalen des ersten Schallwandlers im Vergleich zu den Soll-Signalen des jeweiligen Betriebszustandes auf. Die Servicekontrolleinheit beobachtet das Zeitverhalten der Ist-Werte von ersten Signalen oder Teilen davon, etwa der Frequenz, und zieht daraus Schlüsse auf eine demnächst notwendige Inspektion des Triebwerks. Dies ist möglich, weil bestimmte Frequenzen in dem Schallspektrum der Abgase eines Triebwerks immer häufiger auftreten, wenn das Triebwerk reif für eine Inspektion oder Überholung ist. Somit können mit Hilfe der vorliegenden Ausführungsform der Erfindung individuelle Inspektionsintervalle realisiert werden, die nicht nur Kosten in erheblichem Umfang dadurch sparen können, daß die Inspektionsintervalle im Durchschnitt länger werden, sondern es kann auch ein Zugewinn an Betriebssicherheit dadurch erreicht werden, daß Inspektionsintervalle tatsächlich abgekürzt werden. Besondere Vorteile sind hier etwa dann vorstellbar, wenn bei dem Flugzeugtriebwerk die fällige Inspektion direkt an ein Verwaltungszentrum gemeldet wird, das das Flugzeug dann beim nächsten Anlaufen eines Service- oder Stützpunktflughafens unmittelbar zur Inspektion einteilt.

Bei einer anderen vorteilhaften Ausführungsform der erfindungsgemäßen Vorrichtung ist mindestens ein Körperschallsensor in oder an dem Strahltriebwerk, vorzugsweise an seinem Gehäuse angeordnet, welcher der Zuordnung des Ursprungs von Störungen zu einem bestimmten Abschnitt des Strahltriebwerks dient. Wenn, wie oben beschrieben, eine Störung des Antriebs festgestellt wird, ist es vorteilhaft, die Störungsquelle nach Art und Ort zu bestimmen. Die Art der Störung kann häufig bereits aus den Ist-Signalen, also dem erhaltenen Frequenzspektrum geschlossen werden. Aus der Art der Störung kann, falls bestimmte Störungen ausschließlich in bestimmten Teilen des Strahltriebwerkes auftreten, auch auf den Ursprung der Störung geschlossen werden, beispielsweise bei Verdichterinstabilitäten. Falls dies nicht der Fall ist, kann eine Ortung des Ursprungs der Störung jedoch nicht erfolgen. Für diese Fälle bietet die vorliegende Ausführungsform der erfindungsgemäßen Vorrichtung die Möglichkeit, den Ursprung einer Störung zu lokalisieren, indem am Gehäuse des Strahltriebwerks ein, vorzugsweise mehrere Körperschallsensoren angebracht werden, deren Ergebnisse miteinander verglichen werden können, so daß der Ursprung einer Störung geortet werden kann. Zum Beispiel können derartige Körperschallsensoren am Gehäuse des Strahltriebwerks angebracht werden, einer etwa auf Höhe des Vorverdichters, ein weiterer auf Höhe des Hauptverdichters und noch einer auf Höhe der Turbine. Wenn eine Störung beispielsweise im Hauptverdichter auftritt, wird der entsprechende Körperschallsensor regelmäßig die stärkste Veränderung des Schallprofils aufweisen, woraus der Schluß gezogen werden kann, daß die Quelle der Störung im Hauptverdichter liegt.

Eine weitere vorteilhafte Ausgestaltung der erfindungsgemäßen Vorrichtung weist eine Einheit zur Synchronisierung von zwei oder mehreren Antrieben auf, wobei diese Einheit die ersten Signale der ersten Schallwandler der zu synchronisierenden Antriebe vergleicht und danach Antriebssteuerparameter der Antriebe, etwa die Treibstoffzufuhr, derart verändert, daß sich die ersten Signale der ersten Schallwandler der verschiedenen Antriebe einander annähern. Bei Flugzeugen müssen die Strahltriebwerke synchron laufen, um akustische Störungen, wie Schwebungen oder Wummergeräusche zu vermeiden. Diese Antriebssynchronisierung findet heute regelmäßig aufgrund eines Drehzahlvergleichs der Triebwerke statt. Dieser Drehzahlvergleich ist in der Praxis jedoch mit einer Ungenauigkeit und einer Zeitverzögerung behaftet, die eine schnelle und effiziente Synchronisierung erschweren. Im Rahmen der beschriebenen bevorzugten Ausführungsform der Erfindung ist es möglich, den Betriebszustand der Triebwerke dadurch miteinander zu vergleichen, daß man die ersten Signale der ersten Schallwandler miteinander vergleicht und die Triebwerkssteuerparameter so anpaßt, daß sich diese ersten Signale, beispielsweise die Frequenzspektren, einander annähern. Damit wird eine einfache, wirkungsvolle und schnelle Triebwerkssynchronisation erreicht.

Eine weitere bevorzugte Ausführungsform der erfindungsgemäßen Vorrichtung weist eine Einheit zur Kontrolle, vorzugsweise auch zur Kalibrierung eines Drehzahlmessers für das Strahtriebwerk auf. Herkömmlich basiert die Ausgabe von Drehzahlmessern auf der Messung der Rotationsfrequenz eines rotierenden Teils, beispielsweise der zentralen Antriebswelle des Strahltriebwerkes. Diese Messungen beinhalten durch ihr Prinzip bedingt eine Reihe von Fehlerquellen, die zu Fehlmessungen führen können. Diese Meßfehler können mit Hilfe einer Kontrolleinheit erkannt und korrigiert werden. Die ersten Signale der ersten Schallwandler des Triebwerks werden mit der Ausgabe des Drehzahlmessers verglichen und dieser gegebenenfalls korrigiert. Dieser Vergleich ist möglich, da jede Drehzahl eines Strahltriebwerks einem bestimmten Schallbild des Triebwerks entspricht. Neben einer Kontrolle der korrekten Funktion ist auch eine Kalibrierung des Drehzahlmessers unter definierten Bedingungen der Schallausbreitung möglich. Diese kann in vorgegebenen Zeitabständen oder auch bei Bedarf erfolgen, also bei Registrierung einer deutlichen Abweichung der Ausgabe des Drehzahlmessers von der durch Auswertung des Schallbilds ermittelten Drehzahl.

Erfindungsgemäß wird weiterhin ein Verfahren zur aktiven Reduzierung der Schallemission eines Strahltriebwerks bereitgestellt, das einen Lufteinlaß, einen Gasauslaß und das eigentliche Triebwerk aufweist, das zwischen dem Lufteinlaß und dem Gasauslaß angeordnet ist, aufweisend folgende Schritte: (a) Umwandeln von Schallwellen in erste Signale, die ein Maß für die Frequenz, Amplitude und fiir die Phase der Schallwellen sind, in mindestens einem ersten Schallwandler, der in dem Lufteinlaß vor dem Triebwerk und/oder in dem Gasauslaß nach dem Triebwerk angeordnet ist, (b) Umwandeln der ersten Signale in zweite Signale in einer elektronischen Steuereinheit und (c) Umwandeln der zweiten Signale in Kompensationsschallwellen, die eine Frequenz, Amplitude und Phase aufweisen, so daß sich die Schallwellen und die Kompensationsschallwellen wenigstens teilweise auslöschen, in einem Lautsprecher zweiten Schallwandler, der zentral in dem Lufteinlaß vor oder in einem zentral angeordneten Konus vor dem Triebwerk und/oder auf einer zentral angeordneten Halterung in dem Gasauslaß nach dem Triebwerk angeordnet ist.

Die vorliegende Erfindung stellt somit eine Vorrichtung und ein Verfahren zur aktiven Reduzierung der Schallemission eines Strahltriebwerks zur Verfügung, wobei durch eine Kompensation des Schalls an der Schallquelle die Schallemission eines Flugzeugs zugleich für die Umwelt und für die Insassen auf einfache und effiziente Weise reduziert wird. Die erfindungsgemäße Vorrichtung und das entsprechende Verfahren bieten diese Vorteile bei minimalem Energieeinsatz, geringem konstruktiven Aufwand, vernachlässigbarem Leistungsverlust und gleichzeitiger Gewichtseinsparung für konstruktive Schallschutzmaßnahmen am Flugzeug. Dabei ist zumindest der Lautspreche zentral in dem Triebwerk angeordnet, wodurch bestmögliche symmetrische, lateral begrenzte akustische Bedingungen geschaffen werden. Die Abstrahlung der Kompensationsschallwellen und gegebenenfalls die Schallaufnahme können bei dieser Lösung im wesentlichen parallel zur Hauptschallschwingungsebene erfolgen, wodurch ein hoher Wirkungsgrad der Schallkompensation erreicht wird. Die erfindungsgemäße Vorrichtung kann auf einfache Weise am Triebwerk montiert werden, ohne daß große konstruktive Eingriffe vorgenommen werden müssen. Hierdurch eignet sich die erfindungsgemäße Vorrichtung auch zum Nachrüsten bereits im Einsatz befindlicher Triebwerke. Die Schallkompensationsvorrichtung kann sowohl im Lufteinlaß als auch im Gasauslaß zum Einsatz kommen. Hierdurch wird eine beidseitige Schallkompensation am Triebwerk ermöglicht. Die erfindungsgemäße Vorrichtung kann, erweitert um eine Vergleichseinheit, auch zur Diagnose von Strahltriebwerken eingesetzt werden. Damit kann jederzeit und differenziert der Zustand eines Strahltriebwerks bestimmt werden.

Die Erfindung wird im Folgenden anhand der beiliegenden Figuren beispielhaft beschrieben. Dabei zeigen:
- Figur 1:: Eine Ausführungsform der erfindungsgemäßen Vorrichtung zur Reduzierung der Schallemission von Strahltriebwerken inklusive Diagnosefünktion.
- Figur 2:: Einen Ausschnitt des hinteren Triebwerksendes der Vorrichtung aus Fig. 1 mit durch einen Luftstrom gekühlten Schallwandlern.
- Figur 3:: Ein schematisches Schaltbild zur Funktion der erfindungsgemäßen Vorrichtung.

### Liste der Bezugsziffern:

- 1: Strahltriebwerk
- 2: Aufhängung
- 3: Lufteinlaß
- 4: Gasauslaß
- 5: Triebwerk
- 6, 6': Schallkompensationseinheit (Paar von erstem und zweitem Schallwandler)
- 7, 7': Erster Schallwandler (Mikrophon)
- 8, 8': Zweiter Schallwandler (Lautsprecher)
- 9, 9': Zusätzliche erste Schallwandler (Mikrophone) innerhalb der Haltestreben 11,11'
- 10, 10': Korrekturmikrophone
- 11,11': Haltestreben
- 12: Konus
- 13: Öffnung im Konus 12
- 14: Überkonus
- 15: Endstück des Triebwerks 5
- 16, 16': elektronische Steuereinheit (mit Frequenzanalyseeinheit)
- 17, 17': Vergleichseinheiten
- 18: Diagnoseendgerät
- 19: Außengehäuse des Triebwerks 5
- 20: Innengehäuse des Triebwerks 5
- 21: Körperschallsensor
- 22: Körperschallsensor
- 23: Körperschallsensor
- 30: Schallwellen
- 31: Signale der ersten Schallwandler 7, 7'
- 32: Signale der elektronischen Steuereinheit 16, 16'
- 33: Kompensationsschallwellen des zweiten Schallwandlers 8, 8'

Die mit einem Apostroph versehenen Bezugsziffem bezeichnen jeweils Bauteile im hinteren Triebwerksteil.

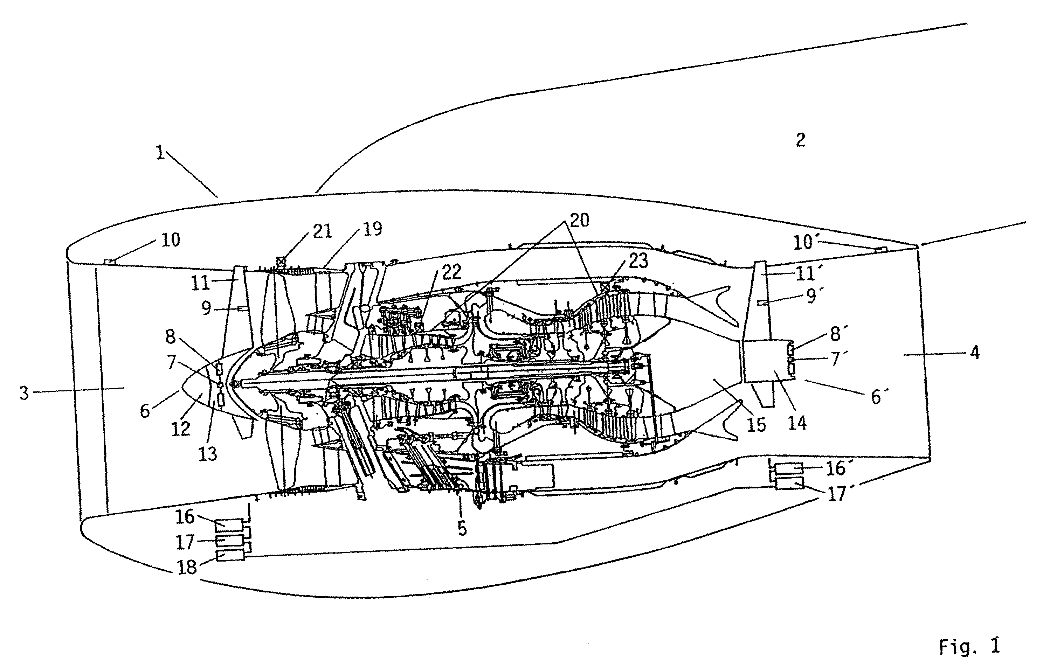

Figur 1 zeigt ein Strahltriebwerk 1, hier ein Zweiwellen-Mantelstromtriebwerk, das an einer Aufhängung 2 angeordnet ist. Das Strahltriebwerk 1 ist mit einer erfindungsgemäßen Vorrichtung zur Reduzierung der Schallemission ausgerüstet. Es weist einen vorderen Lufteinlaß 3 und einen hinteren Gasauslaß 4 auf. Dazwischen ist das eigentliche Triebwerk 5 angebracht. Das Strahltriebwerk 1 nach Figur 1 weist sowohl im Lufteinlaß 3, als auch im Gasauslaß 4 einen ersten Schallwandler 7 bzw. 7', also etwa ein Mikrophon, und als zweiten Schallwandler 8 bzw. 8' einen Lautsprecher auf. Die vordere Schallkompensationseinheit 6 wird von einer elektronischen Steuereinheit 16, die hintere Schallkompensationseinheit 6' wird von einer elektronischen Steuereinheit 16' kontrolliert.

Die vordere Schallkompensationseinheit 6, bestehend aus den Schallwandlern 7, 8, ist in einem Konus 12 in dem Lufteinlaß 3 angebracht, der eine Öffnung 13 zur akustischen Kommunikation der Schallwandler 7, 8 mit dem Kompensationsraum des Lufteinlasses 3 aufweist. Der Schallkompensationsraum, begrenzt durch die Innenfläche des Lufteinlasses 3, weist hier eine konische und damit symmetrische Form auf, die zu definierten akustischen Verhältnissen führt. Die Öffnung 13 in dem Konus 12 setzt diese Symmetrie fort. Das Mikrophon 7 und der, hier ringförmig ausgebildete Lautsprecher 8 sind deshalb zentral angeordnet. Konstruktive, insbesondere aerodynamische Gegebenheiten könnten jedoch auch zu einer anderen, nicht vollständig, aber doch im wesentlichen zentralen Anordnung zwingen. Drei in gleichmäßigem Winkelabstand voneinander vorgesehene Haltestreben, von denen lediglich eine vollständig in Figur 1 als Strebe 11 sichtbar ist, dienen zur Aufhängung des Konus 12. Dieser ist in geringem Abstand vor dem ebenfalls konusförmigen vorderen Ende des Niederdruckverdichters angeordnet. Diese Konstruktion führt nur zu einem geringen zusätzlichen Luftwiderstand durch die Schallkompensationsanlage. Dieser Luftwiderstand kann durch eine aerodynamisch günstige Formung der Streben nochmals gesenkt werden.

Am hinteren Triebswerksende sind das Mikrophon 7' und der Lautsprecher 8' auf einer Plattform angebracht, die an das Endstück 15 des Triebwerks 5 strömungsgerecht angepaßt ist, um die Bildung von Turbulenzen zu vermeiden, die einerseits zu einem erhöhten Luftwiderstand und andererseits zu schwierigeren akustischen Verhältnissen hinsichtlich der Schallkompensation führen könnten. Die Schallkompensationseinheit 6' ist hier sozusagen im Windschatten des Triebwerks 5 angebracht. Diese Einheit wird von drei, in gleichen Winkelabständen voneinander angebrachten Streben, von denen lediglich eine vollständig als Strebe 11' dargestellt ist, gehalten. Die Haltestreben sind vorzugsweise aerodynamisch ausgeformt. Auf diese Weise können Turbulenzen vermieden und der Widerstand minimiert werden.

Die Schallkompensationseinheiten 6, 6' mit den ersten Schallwandlern 7, 7' und den zweiten Schallwandlern 8, 8' werden über Zuleitungen in den Haltestreben 11, 11' mit Strom versorgt. Außerdem verlaufen in den Haltestreben 11, 11' die Verbindungen mit den Steuereinheiten 16, 16', die in der Triebwerksgondel angebracht sind. Die Strebe 11' kann auch zur Heranführung von Kühlluft an die Halterung genutzt werden, falls eine Kühlung der hinteren Schallkompensationseinheit 6' mit den Schallwandlern 7', 8' notwendig ist.

Fig. 1 zeigt des weiteren zwei weitere Mikrophone 9, 9', die vor der Schallkompensationsebene innerhalb der Haltestreben 11, 11' angeordnet sind. Die Mikrophone 9, 9' dienen der ergänzenden meßtechnischen Erfassung des Triebwerksgeräusches. Die akustische Messung erfolgt strömungsabgewandt durch eine Öffnung an der Hinterkante der Streben 11, 11'. Der thermische Schutz des hinteren Mikrophons 9' erfolgt sinngemäß wie bei der Schallkompensationseinheit 6', was nachfolgend noch beschrieben wird.

Weiterhin dargestellt sind zwei Korrekturmikrophone 10, 10', welche innerhalb des Strahltriebwerks 1 nach der Schallkompensationsebene in der Wandung des Lufteinlasses 3 bzw. des Gasauslasses 4 angeordnet sind. Die Korrekturmikrophone 10, 10' nehmen den eventuell nicht kompensierten Restschall des Strahltriebwerks 1 auf und dienen somit zur Kontrolle der Schallkompensation.

Die vorliegende Ausführungsform der erfindungsgemäßen Vorrichtung umfaßt des weiteren Einrichtungen zur Diagnose des Zustands oder Betriebs des Strahltriebwerks 1. Von den ersten Schallwandlern 7, 7' werden die den Schall in dem Lufteinlaß 3 oder Gasauslaß 4 des Strahltriebwerks darstellenden ersten Signale den elektronischen Steuereinheiten 16, 16' zugeführt und dort für die Schallkompensation aufbereitet. Die Vergleichseinheiten 17, 17' erhalten für den vorstehend beschriebenen Vergleich der Soll- und Ist-Werte die erforderlichen Daten entweder von den elektronischen Steuereinheiten 16, 16' oder direkt die ersten Signale der ersten Schallwandler 7, 7'.

In Figur 1 ist weiterhin ein Diagnoseendgerät 18 zum Vergleich der Output-Signale der beiden Vergleichseinheiten 17 und 17' gezeigt. In der Einheit 18 werden Abweichungen der Ist-Wert-Signale von den Soll-Wert-Signalen, die von der vorderen Vergleichseinheit 17 ermittelt wurden, mit den entsprechenden Abweichungen, die von der hinteren Vergleichseinheit 17' festgestellt wurden, verglichen, um so eine sichere und/oder differenzierte Aussage über eine möglicherweise auftretende Störung zu machen. Sowohl die Art der Störung, wie auch der Ursprungsort der Störung können hiermit besser analysiert werden. In dem Diagnoseendgerät 18 sind die Schnittstellen für die externe Nutzung der Diagnosedaten untergebracht, beispielsweise für eine Datenleitung zum Cockpit, für Datenfunk, für ein Diskettenlaufwerk oder einen Bildschirm.

Figur 1 zeigt femer drei Körperschallsensoren 21, 22 und 23, wovon der Sensor 21 an dem Außengehäuse 19 des Triebwerks 5 und die Sensoren 22 und 23 an dem Innengehäuse 20 des Triebwerks 5 angebracht sind. Sie sind derart verteilt und angeordnet, daß sich eine auftretende Störung, die beispielsweise von der vorderen Vergleichseinheit 17 oder der hinteren Vergleichseinheit 17' diagnostiziert wird, in vielen Fällen örtlich besser lokalisieren läßt. Denn viele Störungen verursachen neben einem differenzierten Luftschallspektrum auch Körperschall, der mehr oder weniger charakteristisch ist, der aber in jedem Fall seinen lokalen Ursprung erkennen läßt. Damit kann eine Störung sicherer und schneller lokalisiert werden, so daß etwa zu veranlassende Reparaturmaßnahmen im voraus bestimmt werden können. Die Signale der Körperschallsensoren 21, 22, 23 werden an die Vergleichseinheiten 17, 17' und/oder an das Diagnoseendgerät 18 übermittelt.

Die vorliegende Ausführungsform der erfindungsgemäßen Vorrichtung bietet die Möglichkeit einer Zustands- und Betriebsdiagnose für ein Strahltriebwerk auf einfache und kostensparende Weise.

Um unter entsprechenden Witterungsbedingungen eine Vereisung der vorderen Schallwandlereinheit 6 zu verhindern, können der Einlaufkonus 12 und die Streben 11 auch elektrisch beheizt werden. Die Stromversorgung der Heizelemente erfolgt dann vorzugsweise durch die Streben 11.

Die in Figur 1 gezeigte Vorrichtung zur Reduzierung von Schallemissionen eines Strahltriebwerks kann auf einfache Weise additiv an ein bestehendes Triebwerk angeordnet werden. Bei Neukonstruktionen von Triebwerken können dann auch integrierte Anordnungen vorgesehen werden, die aerodynamisch noch besser angepaßt sind.

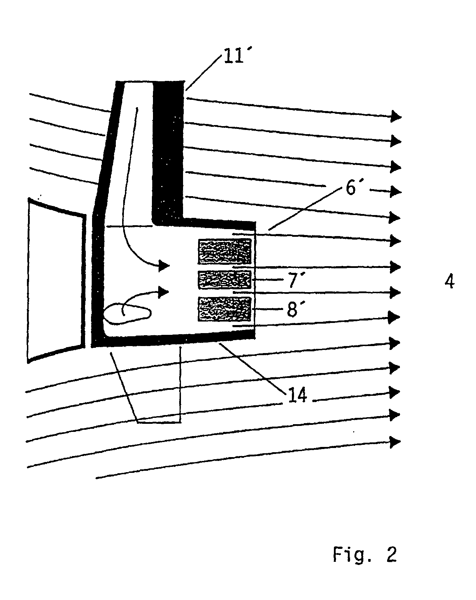

Figur 2 zeigt einen Ausschnitt der Vorrichtung aus Fig. 1. Zur Kühlung der hinteren Schallkompensationseinheit 6' mit den Schallwandlem 7' und 8' ist ein Überkonus 14 vorgesehen, in dem die Kompensationseinheit 6' auf Distanz montiert ist. Zur Kühlung der Schallkompensationseinheit 6' wird Kühlluft durch die Haltestreben 11' in den Überkonus 14 hineingeführt. Die herbeigeführte Kühlluft wird in den hinteren Teil des Überkonus 14 hineingeführt und fließt dann, die Schallwandler 7', 8' einschließend, nach außen in den Gasauslaß 4 ab. Sie verhindert gleichzeitig das Entstehen rückströmender Heißgasturbulenzen, welche die Schallwandler 7', 8' beaufschlagen könnten. Hierfür weist der Überkonus 14 entsprechende Öffnungen auf. Zur Kühlung kann beispielsweise Außenluft oder, bei dem dargestellten Mantelstromtriebwerk, relativ kühle Luft aus dem Mantelstrom abgegriffen werden. Während des Anlaßvorgangs des Triebwerks oder des Abstellens erfolgt die Förderung der Kühlluft gegebenenfalls mittels eines Ventilators. Auf die beschriebene Weise kann die hintere Schallkompensationseinheit 7', 8' thermisch gut kontrolliert werden.

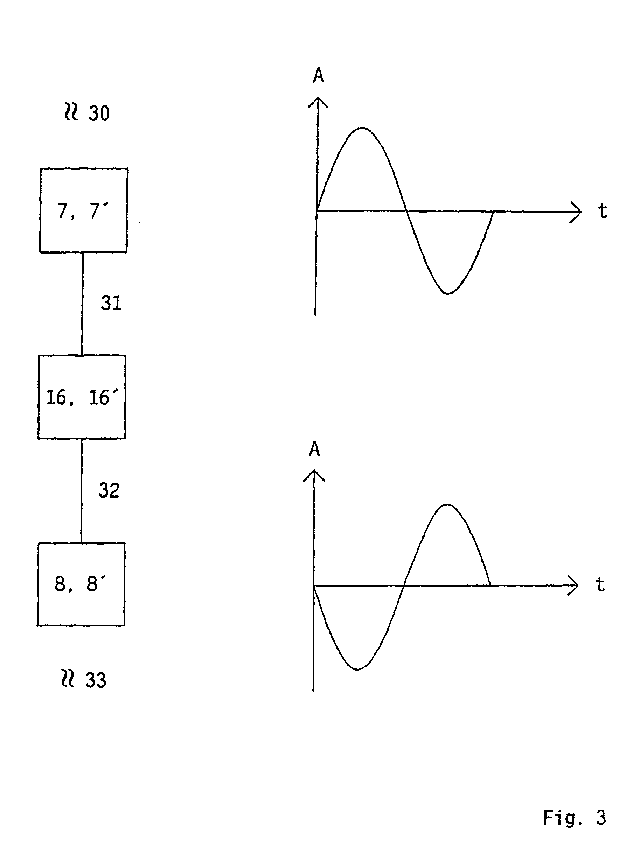

Figur 3 zeigt eine schematische Darstellung der Funktionsweise der vorliegenden Erfindung. Schallwellen 30 treffen auf den ersten Schallwandler 7, 7', zum Beispiel ein Mikrophon, und werden in erste Signale 31 umgesetzt, die ein Maß fiir die Frequenz, Amplitude und die Phase der Schallwellen 30 sind. In der elektronischen Steuereinheit 16, 16' werden die ersten Signale 31 aufbereitet und für die Schallkompensation in zweite Signale 32 umgesetzt, die gegenüber den ersten Signalen 31 um 180° phasenversetzt sind. Die Schallwellen 30 können dabei auch z. B. einer Fourieranalyse unterzogen werden, um das komplexe Schallbild in elementare Sinusschwingungen zu zerlegen. Eine derartige Sinusschwingung ist in Figur 3 dargestellt.

Der zweite Schallwandler 8, 8', etwa ein Lautsprecher, gibt dann, entsprechend den zweiten Signalen 32 Kompensationsschallwellen 33 aus. Falls eine Fourieranalyse durchgeführt wurde, wird beispielsweise eine Elementarkompensationswelle pro Elementarwelle ausgestrahlt. Eine solche Elementarkompensationswelle ist ebenfalls in Figur 3 dargestellt. Sie weist die gleiche Frequenz und Amplitude und eine gegenläufige Phase, wie die zugehörige, ebenfalls in Figur 3 dargestellte Elementarwelle auf.

## Patentansprüche

1. Vorrichtung zur aktiven Reduzierung der Schallemission eines Strahltriebwerks (1) mit einem Lufteinlaß (3), einem Gasauslaß (4) und einem Triebwerk (5), das zwischen dem Lufteinlaß (3) und dem Gasauslaß (4) angeordnet ist, aufweisend:
(a) mindestens einen ersten Schallwandler (7, 7'), der in dem Lufteinlaß (3) vor dem Triebwerk (5) und/oder in dem Gasauslaß (4) nach dem Triebwerk (5) angeordnet ist, zur Umwandlung von Schallwellen (30) in erste Signale (31), die ein Maß für die Frequenz, für die Amplitude und für die Phase der Schallwellen (30) sind,
(b) eine elektronische Steuereinheit (16, 16') zur Umwandlung der ersten Signale (31) in zweite Signale (32),
**gekennzeichnet durch**
(c) mindestens einen Lautsprecher als zweiten Schallwandler (8), der zentral in dem Lufteinlaß (3) vor oder in einem zentral angeordneten Konus vor dem Triebwerk (5) angeordnet ist, zur Umwandlung der zweiten Signale (32) in Kompensationsschallwellen (33), die eine Frequenz, Amplitude und Phase aufweisen, so daß sich die Schallwellen (30) und die Kompensationsschallwellen (33) wenigstens teilweise auslöschen
und/oder
(d) mindestens einen Lautsprecher als zweiten Schallwandler (8'), der auf einer zentral angeordneten Halterung in dem Gasauslaß (4) nach dem Triebwerks (5) angeordnet ist, zur Umwandlung der zweiten Signale (32) in Kompensationsschallwellen (33), die eine Frequenz, Amplitude und Phase aufweisen, so daß sich die Schallwellen (30) und die Kompensationsschallwellen (33) wenigstens teilweise auslöschen.

2. Vorrichtung nach Anspruch 1, bei welcher zumindest ein erster Schallwandler (7,7') zentral in dem Lufteinlaß (3) vor dem Triebwerk (5) und/oder zentral in dem Gasauslaß (4) nach dem Triebwerk (5) angeordnet ist.

3. Vorrichtung nach einem der vorhergehenden Ansprüche, bei welcher der Lufteinlaß (3) zentral einen Konus (12) mit mindestens einer Öffnung (13) aufweist, wobei der erste Schallwandler (7) und der zweite Schallwandler (8) in dem Konus (12) derart angebracht sind, daß sie über die Öffnung (13) mit dem Lufteinlaß (3) akustisch in Verbindung stehen.

4. Vorrichtung nach Anspruch 3, bei welcher der zentrale Konus (12) im Lufteinlaß (3) strömungstechnisch an das vordere Ende des Triebwerks angepaßt ist.

5. Vorrichtung nach einem der vorhergehenden Ansprüche, bei welcher der Gasauslaß (4) eine zentrale Halterung (14) zur Aufnahme des ersten Schallwandlers (7') und des zweiten Schallwandlers (8') aufweist.

6. Vorrichtung nach Anspruch 5, bei welcher die zentrale Halterung (14) an das Endstück (15) des Triebwerks (5) strömungstechnisch angepaßt ist.

7. Vorrichtung nach einem der vorhergehenden Ansprüche, weiterhin aufweisend eine Kühleinrichtung zur Kühlung des zweiten Schallwandlers (8') und/oder des ersten Schallwandlers (7') im Gasauslaß (4).

8. Vorrichtung nach einem der vorhergehenden Ansprüche, weiterhin aufweisend eine Vergleichseinheit (17, 17') zum Vergleich der ersten Signale (31) des ersten Schallwandlers (7, 7') mit Soll-Signalen.

9. Vorrichtung nach Anspruch 8, weiterhin aufweisend eine Ausgabeeinheit zur Ausgabe eines Warnsignals bei Auftreten mindestens einer vorherbestimmten Abweichung der ersten Signale (31) des ersten Schallwandlers (7, 7') von den Soll-Signalen.

10. Vorrichtung nach Anspruch 8 oder 9, weiterhin aufweisend eine Service-Kontrolleinheit zur Berechnung und Anzeige des Fälligkeitstermins des nächsten Services fiir das Strahltriebwerk (1) aufgrund des Zeitverhaltens der ersten Signale (31) des ersten Schallwandlers (7, 7') im Vergleich zu den Soll-Signalen.

11. Vorrichtung nach einem der vorhergehenden Ansprüche **gekennzeichnet durch** eine Einheit zur Synchronisierung von mindestens zwei Strahltriebwerken (1), wobei die Einheit die ersten Signale (31) der ersten Schallwandler (7, 7') der Strahltriebwerke (1) miteinander vergleicht und bei Abweichung Steuerparameter der Strahltriebwerke (1) derart verändert, daß sich die ersten Signale (31) der ersten Schallwandler (7, 7') der Strahltriebwerke (1) einander anpassen.

12. Verfahren zur aktiven Reduzierung der Schallemission eines Strahltriebwerks (1) mit einem Lufteinlaß (3), einem Gasauslaß (4) und einem Triebwerk (5), das zwischen dem Lufteinlaß (3) und dem Gasauslaß (4) angeordnet ist, aufweisend folgende Schritte:
(a) Umwandeln von Schallwellen (30) in erste Signale (31), die ein Maß fiir die Frequenz, Amplitude und die Phase der Schallwellen (30) sind, in mindestens einem ersten Schallwandler (7, 7'), der in dem Lufteinlaß (3) vor dem Triebwerk (5) und/oder in dem Gasauslaß (4) nach dem Triebwerk (5) angeordnet ist,
(b) Umwandeln der ersten Signale (31) in zweite Signale (32) in einer elektronischen Steuereinheit (16, 16'),
**gekennzeichnet durch**
(c) Umwandeln der zweiten Signale (32) in Kompensationsschallwellen (33), die eine Frequenz, Amplitude und Phase aufweisen, so daß sich die Schallwellen (30) und die Kompensationsschallwellen (33) wenigstens teilweise auslöschen, in mindestens einem Lautsprecher als zweitem Schallwandler (8), der zentral in dem Lufteinlaß (3) vor oder in einem zentral angeordneten Konus vor dem Triebwerk (5) angeordnet ist
und/oder
(d) Umwandeln der zweiten Signale (32) in Kompensationsschallwellen (33), die eine Frequenz, Amplitude und Phase aufweisen, so daß sich die Schallwellen (30) und die Kompensationsschallwellen (33) wenigstens teilweise auslöschen, in mindestens einem Lautsprecher als zweitem Schallwandler (8'), der auf einer zentral angeordneten Halterung in dem Gasauslaß (4) nach dem Triebwerks (5) angeordnet ist.

13. Verfahren nach Anspruch 12, bei welchem der erste Schallwandler (7, 7') in Verfahrensschritt (a) zentral in dem Lufteinlaß (3) vor dem Triebwerk (5) und/oder zentral in dem Gasauslaß (4) nach dem Triebwerk (5) angeordnet ist.

14. Verfahren nach Anspruch 12 oder 13, bei welchem in einer Vergleichseinheit (17, 17') die ersten Signale (31) des ersten Schallwandlers (7, 7') mit Soll-Signalen verglichen werden.

15. Verfahren nach einem der Ansprüche 12 bis 14, bei welchem mittels einer Ausgabeeinheit bei Auftreten mindestens einer vorbestimmten Abweichung der ersten Signale (31) des ersten Schallwandlers (7, 7') von Soll-Signalen ein Warnsignal ausgegeben wird.

16. Verfahren nach einem der Ansprüche 12 bis 15, bei welchem der Fälligkeitstermin des nächsten Services des Strahltriebwerks (1) aufgrund des Zeitverhaltens der ersten Signale (31) des ersten Schallwandlers (7, 7') im Vergleich zu Soll-Signalen von einer Service-Kontrolleinheit berechnet und angezeigt wird.

17. Verfahren nach einem der Ansprüche 12 bis 16, bei welchem die ersten Signale 31 der ersten Schallwandler (7,7') von zwei oder mehreren Strahltriebwerken (1) verglichen werden und auf der Basis dieses Vergleichs Steuerparameter der Strahltriebwerke (1) derart verändert werden, daß sich die ersten Signale (31) der ersten Schallwandler (7, 7') der Strahltriebwerke einander angleichen, um so die Strahltriebwerke (1) miteinander zu synchronisieren.

## Claims

1. An apparatus for active reduction of the noise emissions from a jet engine (1) having an air inlet (3), a gas outlet (4) and an engine (5) which is arranged between the air inlet (3) and the gas outlet (4), comprising:
(a) at least one first acoustic transducer (7, 7') which is arranged in the air inlet (3) upstream of the engine (5), and/or in the gas outlet (4) downstream of the engine (5), for converting sound waves (30) into first signals (31) which are a measure of the frequency, the amplitude and the phase of the soundwaves (30),
(b) an electronic control unit (16, 16') for converting the first signals (31) into second signals (32),
**characterized by**
(c) at least one loudspeaker as second acoustic transducer (8) which is arranged centrally in the air inlet (3) upstream of the engine or in a centrally arranged cone upstream of the engine (5), for converting the second signals (32) into compensation sound waves (33) whose frequency, amplitude and phase are such that the sound waves (30) and the compensation sound waves (33) at least partially cancel one another out
and/or
(d) at least one loudspeaker as second acoustic transducer (8') which is arranged on a centrally arranged holder in the gas outlet (4) downstream of the engine (5), for converting the second signals (32) into compensation sound waves (33) whose frequency, amplitude and phase are such that the sound waves (30) and the compensation sound waves (33) at least partially cancel one another out.

2. Apparatus according to Claim 1, in which at least one first acoustic transducer (7, 7') is arranged centrally in the air inlet (3) upstream of the engine (5), and/or centrally in the gas outlet (4) downstream of the engine (5).

3. Apparatus according to one of the preceding claims, in which the air inlet (3) comprises, centrally, a cone (12) having at least one opening (13), in which case the first acoustic transducer (7) and the second acoustic transducer (8) are fitted in the cone (12) in such a manner that they are acoustically connected to the air inlet (3) via the opening (13).

4. Apparatus according to Claim 3, in which the central cone (12) in the air inlet (3) is matched, in terms of flow mechanics, to the front end of the engine.

5. Apparatus according to one of the preceding claims, in which the gas outlet (4) comprises a central holder (14) for accommodating the first acoustic transducer (7') and the second acoustic transducer (8').

6. Apparatus according to Claim 5, in which the central holder (14) is matched, in terms of flow mechanics, to the tailpiece (15) of the engine (5).

7. Apparatus according to one of the preceding claims, furthermore comprising a cooling device for cooling the second acoustic transducer (8') and/or the first acoustic transducer (7') in the gas outlet (4).

8. Apparatus according to one of the preceding claims, furthermore comprising a comparison unit (17, 17') for comparing the first signals (31) from the first acoustic transducer (7, 7') with nominal signals.

9. Apparatus according to Claim 8, furthermore comprising an output unit for outputting a warning signal when at least one predetermined discrepancy occurs between the first signals (31) from the first acoustic transducer (7, 7') and the nominal signals.

10. Apparatus according to Claim 8 or 9, furthermore comprising a service monitoring unit for calculating and indicating the date when the next servicing for the jet engine (1) is due on the basis of the time behaviour of the first signals (31) from the first acoustic transducer (7, 7') in comparison to the nominal signals.

11. Apparatus according to one of the preceding claims, **characterized by** a unit for synchronizing at least two jet engines (1), in which case the unit compares the first signals (31) from the first acoustic transducers (7, 7') of the jet engines (1) with one another and, in the event of a discrepancy, varies control parameters for the jet engines (1) in such a manner that the first signals (31) from the first acoustic transducers (7, 7') of the jet engines (1) are matched to one another.

12. Method for active reduction of the noise emission from a jet engine (1) comprising an air inlet (3), a gas outlet (4) and an engine (5) which is arranged between the air inlet (3) and the gas outlet (4), comprising the following steps:
(a) converting of sound waves (30) into first signals (31) which are a measure of the frequency, amplitude and phase of the sound waves (30), in at least one first acoustic transducer (7, 7') which is arranged in the air inlet (3) upstream of the engine (5), and/or in the gas outlet (4) downstream of the engine (5),
(b) converting of the first signals (31) into second signals (32) in an electronic control unit (16, 16'),
**characterized by**
(c) converting of the second signals (32) into compensation sound waves (33) whose frequency, amplitude and phase are such that the sound waves (30) and the compensation sound waves (33) at least partially cancel one another out, in at least one loudspeaker as second acoustic transducer (8) which is arranged centrally in the air inlet (3) upstream of the engine (5) or in a centrally arranged cone upstream of the engine (5)
and/or
(d) converting of the second signals (32) into compensation sound waves (33) whose frequency, amplitude and phase are such that the sound waves (30) and the compensation sound waves (33) at least partially cancel one another out, in at least one loudspeaker as second acoustic transducer (8') which is arranged on a centrally arranged holder in the gas outlet (4) downstream of the engine (5).

13. Method according to Claim 12, in which the first acoustic transducer (7, 7') in method step (a) is arranged centrally in the air inlet (3) upstream of the engine (5), and/or centrally in the gas outlet (4) downstream of the engine (5).

14. Method according to Claim 12 or 13, in which the first signals (31) from the first acoustic transducer (7, 7') are compared, in a comparison unit (17, 17'), with nominal signals.

15. Method according to one of the Claims 12 to 14, in which a warning signal is output by means of an output unit when at least one predetermined discrepancy occurs between the first signal (31) from the first acoustic transducer (7, 7') and the nominal signals.

16. Method according to one of the Claims 12 to 15, in which the date when the next servicing of the jet engine (1) is due is calculated and indicated by a service monitoring unit on the basis of the time behaviour of the first signals (31) from the first acoustic transducer (7, 7') in comparison with nominal signals.

17. Method according to one of the Claims 12 to 16, in which the first signals (31) from the first acoustic transducers (7, 7') from two or more jet engines (1) are compared and, on the basis of this comparison, control parameters for the jet engines (1) are varied in such a manner that the first signals (31) from the first acoustic transducers (7, 7') of the jet engines are matched to one another, in order to synchronize in this way the jet engines (1) to one another.

## Revendications

1. Dispositif pour la réduction active de l'émission acoustique d'un propulseur à réaction (1) avec une entrée d'air (3), une sortie de gaz (4) et un propulseur (5) qui est disposé entre l'entrée d'air (3) et la sortie de gaz (4), comprenant :
(a) au moins un premier transducteur acoustique (7, 7') qui est disposé dans l'entrée d'air (3) avant le propulseur (5) et/ou dans la sortie de gaz (4) après le propulseur (5) afin de convertir des ondes acoustiques (30) en premiers signaux (31) qui fournissent une indication sur la fréquence, sur l'amplitude et sur la phase des ondes acoustiques (30),
(b) une unité de commande électronique (16, 16') pour convertir les premiers signaux (31) en seconds signaux (32),
**caractérisé par**
(c) au moins un haut-parleur (8) faisant fonction de second transducteur acoustique, lequel est disposé en position centrale dans l'entrée d'air (3) avant le propulseur (5) afin de convertir les seconds signaux (32) en ondes acoustiques de compensation (33) qui présentent une fréquence, une amplitude et une phase telles que les ondes acoustiques (30) et les ondes acoustiques de compensation (33) s'annulent au moins partiellement
et/ou
(d) au moins un haut-parleur (8') faisant fonction de second transducteur acoustique, lequel est disposé sur un support disposé en position centrale dans une sortie de gaz (4) après le propulseur (5) afin de convertir les seconds signaux (32) en ondes acoustiques de compensation (33) qui présentent une fréquence, une amplitude et une phase telles que les ondes acoustiques (30) et les ondes acoustiques de compensation (3) s'annulent au moins partiellement.

2. Dispositif selon la revendication 1, dans lequel au moins un premier transducteur acoustique (7, 7') est disposé en position centrale dans l'entrée d'air (3) avant le propulseur (5) et/ou en position centrale dans la sortie de gaz (4) après le propulseur (5).

3. Dispositif selon une des revendications précédentes, dans lequel l'entrée d'air (3) comporte, en position centrale, un cône (12) avec au moins une ouverture (13), le premier transducteur acoustique (7) et le second transducteur acoustique (8) étant disposés dans le cône (12) de façon à être reliés acoustiquement à l'entrée d'air (3) à travers l'ouverture (13).

4. Dispositif selon la revendication 3, dans lequel le cône central (12) dans l'entrée d'air (3) est adapté en termes d'écoulement à l'extrémité avant du propulseur.

5. Dispositif selon une des revendications précédentes, dans lequel la sortie de gaz (4) comporte un support central (14) pour recevoir le premier transducteur acoustique (7') et le second transducteur acoustique (8').

6. Dispositif selon la revendication 5, dans lequel le support central (14) est adapté en termes d'écoulement à la partie arrière (15) du propulseur (5).

7. Dispositif selon une des revendications précédentes, comprenant également un dispositif de refroidissement pour refroidir le second transducteur acoustique (8') et/ou le premier transducteur acoustique (7') dans la sortie de gaz (4).

8. Dispositif selon une des revendications précédentes, comprenant également une unité de comparaison (17, 17') pour comparer les premiers signaux (31) du premier transducteur acoustique (7, 7') à des signaux de consigne.

9. Dispositif selon . la revendication 8, comprenant également une unité de fourniture pour fournir un signal d'avertissement lors de l'apparition d'au moins un écart prédéterminé entre les premiers signaux (31) du premier transducteur acoustique (7, 7') et les signaux de consigne.

10. Dispositif selon la revendication 8 ou 9, comprenant également une unité de contrôle d'entretien pour calculer et afficher la date d'échéance du prochain entretien du propulseur à réaction (1) sur la base du comportement dans le temps des premiers signaux (31) du premier transducteur acoustique (7, 7') par rapport aux signaux de consigne.

11. Dispositif selon une des revendications précédentes, **caractérisé par** une unité pour la synchronisation d'au moins deux propulseurs à réaction (1), l'unité comparant entre eux les premiers signaux (31) des premiers transducteurs acoustiques (7, 7') des propulseurs à réaction (1) et, en présence d'un écart, modifiant les paramètres de commande des propulseurs à réaction (1), de façon que les premiers signaux (31) des premiers transducteurs acoustiques (7, 7') des propulseurs à réaction (1) soient en concordance mutuelle.

12. Procédé pour la réduction active de l'émission acoustique d'un propulseur à réaction (1) avec une entrée d'air (3), une sortie de gaz (4) et un propulseur (5) qui est disposé entre l'entrée d'air (3) et la sortie de gaz (4), comprenant les étapes suivantes :
(a) conversion d'ondes acoustiques (30) en premiers signaux (31) fournissant une indication sur la fréquence, l'amplitude et la phase des ondes acoustiques (30), dans au moins un premier transducteur acoustique (7, 7') qui est disposé dans l'entrée d'air (3) avant le propulseur (5) et/ou dans la sortie de gaz (4) après le propulseur (5),
(b) conversion des premiers signaux (31) en seconds signaux (32) dans une unité de commande électronique (16, 16'),
**caractérisé par**
(c) conversion des seconds signaux (32) en ondes acoustiques de compensation (33) qui présentent une fréquence, une amplitude et une phase telles que les ondes acoustiques (30) et les ondes acoustiques de compensation (33) s'annulent au moins partiellement, dans au moins un haut-parleur (8) faisant fonction de second transducteur acoustique, lequel est disposé en position centrale dans l'entrée d'air (3) avant ou dans un cône placé avant le propulseur (5)
et/ou
(d) conversion des seconds signaux (32) en ondes acoustiques de compensation (33) qui présentent une fréquence, une amplitude et une phase telles que les ondes acoustiques (30) et les ondes acoustiques de compensation (33) s'annulent au moins partiellement, dans au moins un haut-parleur faisant fonction de second transducteur acoustique (8'), lequel est disposé sur un support disposé en position centrale dans la sortie de gaz (4) après le propulseur (5).

13. Procédé selon la revendication 12, dans lequel le premier transducteur acoustique (7, 7') dans l'étape de procédé (a) est disposé en position centrale dans l'entrée d'air (3) avant le propulseur (5) et/ou en position centrale dans la sortie de gaz (4) après le propulseur (5).

14. Dispositif selon la revendication 12 ou 13, dans lequel les premiers signaux (31) du premier transducteur acoustique (7, 7') sont comparés avec des signaux de consigne dans une unité de comparaison (17, 17').

15. Procédé selon une des revendications 12 à 14, dans lequel, lors de l'apparition d'au moins un écart prédéterminé entre les premiers signaux (31) du premier transducteur acoustique (7, 7') et des signaux de consigne, un signal d'avertissement est fourni au moyen d'une unité de fourniture.

16. Procédé selon une des revendications 12 à 15, dans lequel la date d'échéance du prochain entretien du propulseur à réaction (1) est calculée et affichée par une unité de contrôle d'entretien sur la base du comportement dans le temps des premiers signaux (31) du premier transducteur acoustique (7, 7') par rapport à des signaux de consigne.

17. Procédé selon une des revendications 12 à 16, dans lequel les premiers signaux 31 des premiers transducteurs acoustiques (7, 7') de deux ou plusieurs propulseurs à réaction (1) sont comparés et, sur la base de cette comparaison, des paramètres de commande des propulseurs à réaction (1) sont modifiés, de façon que les premiers signaux (31) des premiers transducteurs acoustiques (7, 7') des propulseurs à réaction soient en concordance mutuelle afin de synchroniser ainsi les propulseurs à réaction (1) entre eux.
